# EUROPÄISCHE PATENTANMELDUNG

(11) **EP 2 341 022 A2**
(43) Veröffentlichungstag der Anmeldung: **06.07.2011**
(21) Anmeldenummer: 10188691.9
(22) Anmeldetag: 25.10.2010
(51) Int. Cl.: B65H 18/20

(54) **Rollenwickelvorrichtung**

(30) Priorität: 29.12.2009 DE 102009055374
(71) Anmelder: Voith Patent GmbH, 89520 Heidenheim (DE)
(72) Erfinder: van Haag, Rolf, 47647, Kerken (DE); Klupp, Alexander, 41812, Erkelenz (DE); Schuster, Thomas, 47665, Sonsbeck (DE)

(57) **Zusammenfassung**

Rollenwickelvorrichtung zum Aufwickeln einer Materialbahn, insbesondere einer Papier- oder Kartonbahn, auf mindestens einen Wickelkern, vorzugsweise eine Wickelhülse zu mindestens einer Wickelrolle, an der beim Wickeln mindestens eine in einem, eine Lagersteifigkeit aufweisenden Walzenlager gelagerte Walze anliegt, wobei das Walzenlager über ein, eine Dichtungssteifigkeit aufweisendes Dämpfungsmittel bewegbar mit einer Abstützung verbunden ist.

Man möchte den Wickelaufbau verbessern und insbesondere die Verhältnisse im Aufwickelbereich stabilisieren.

Dazu ist es vorgesehen, dass das Verhältnis aus Dichtungssteifigkeit durch Lagersteifigkeit kleinergleich 0,55, bevorzugt kleinergleich 0,3, ganz bevorzugt nahe Null ist.

## Beschreibung

Die Erfindung betrifft eine Rollenwickelvorrichtung zum Aufwickeln einer Materialbahn, insbesondere einer Papier- oder Kartonbahn, auf mindestens einen Wickelkern, vorzugsweise eine Wickelhülse zu mindestens einer Wickelrolle, an der beim Wickeln mindestens eine in einem, eine Lagersteifigkeit aufweisenden Walzenlager gelagerte Walze anliegt, wobei das Walzenlager über ein, eine Dichtungssteifigkeit aufweisendes Dämpfungsmittel bewegbar mit einer Abstützung verbunden ist.

Die Erfindung wird im Folgenden im Zusammenhang mit der Behandlung einer Papierbahn erläutert. Sie ist jedoch auch bei anderen Bahnen entsprechend anwendbar, die ähnlich zu handhaben sind. Dabei handelt es sich beispielsweise, jedoch nicht erschöpfend, um Bahnen aus Karton, Kunststoff-oder Metallfolien.

Papierbahnen werden in relativ großen Breiten von bis zu über 11 m in einer Papiermaschine produziert. Die Produktion erfolgt quasi endlos. Dabei definiert die Warenlaufrichtung der Papiermaschine für alle in der Papierfabrik befindlichen Maschinen und Einrichtungen die Längs- und in horizontaler Ebene senkrecht dazu die Querrichtung. Zur Vereinfachung der vorliegenden Schrift wird im Weiteren an geeigneten Stellen die Längsrichtung als X-Richtung, die Querrichtung als Y-Richtung und die auf einer durch diese beiden Richtungen aufgespannten Ebene senkrecht stehende Höhenrichtung als Z-Richtung bezeichnet. Am Ende der Papiermaschine wird die erzeugte Papierbahn in voller Breite auf einen Wickelkern aufgewickelt. Dieser Wickelkern wird zyklisch, in aller Regel bei laufender Produktion, ersetzt. Die auf diese Weise entstehende, bahnbreite Wickelrolle wird üblicherweise als Mutterrolle oder Volltambour bezeichnet. Um für einen späteren Verwender, beispielsweise eine Druckerei, handhabbar zu sein, muss die auf einer Mutterrolle gewickelte Papierbahn in mehrere parallel verlaufende Teilbahnen geschnitten werden, deren Breiten für den jeweiligen späteren Verwender geeignet sind. Diese Breiten können fallweise stark variieren, so dass die Aufteilung der Papierbahn üblicherweise nach einem individuell definierbaren Schnittmuster vorgenommen wird. Die Teilbahnen werden dann zu Wickelrollen aufgewickelt, die man Teilbahn- oder Fertigrollen nennt und die gemeinsam als sogenannter Rollenwurf ausgegeben werden. Das Schnittmuster ist von Rollenwurf zu Rollenwurf änderbar. Das Längsschneiden und Aufwickeln erfolgt zweckmäßigerweise in einer einzigen Maschine, der sogenannten Rollenschneidmaschine, die für die Zwecke der vorliegenden Anmeldung allgemein als Rollenwickelvorrichtung bezeichnet wird, da beispielsweise auch bei dem reinen Umrollen einer Mutterrolle, ohne Formatänderungen mindestens ein Teil der möglichen Wickelprobleme auftreten kann.

Eine Rollenschneidvorrichtung besteht im Wesentlichen aus einer Abrolleinrichtung, einer Schneidpartie und einer Aufrolleinrichtung, wobei die Schneidpartie eine entsprechend der möglichen Teilungen angepassten Anzahl von meist scheibenförmig ausgebildeten Schneiden aufweist.

Bei der Ausgestaltung einer Rollenschneidvorrichtung unterscheidet der Fachmann zwischen zwei grundsätzlichen Bautypen, nämlich dem Tragwalzenroller und dem Stützwalzenroller.

Kennzeichnend für den Tragwalzenroller-Typ ist eine Aufrolleinrichtung, bei der der gesamte Rollenwurf in einem Wickelbett, das in der Regel aus zwei Tragwalzen besteht, auf Wickelhülsen aufgewickelt wird. Die Wickelhülsen des Rollenwurfes können achslos durch Spann- beziehungsweise Führungsköpfe oder, in selteneren Fällen, durch in die Wickelhülsen eingeführte Wickelwellen gehalten werden. Die Rollen werden gemeinsam, als kompletter Wurf, aufgewickelt. In der Regel geschieht dies mittels einer Umfangswicklung, wozu mindestens eine der beiden Tragwalzen antreibbar ist. Wird eine Wickelwelle verwendet kann auch eine Zentrumswicklung oder eine Kombination von beidem stattfinden.

In einer für den Stützwalzenroller-Typ kennzeichnenden Aufrolleinrichtung wird jede einzelne zu wickelnde Rolle in einer eigenen Wickelstation gewickelt. Die Rollen stützen sich während des Wickelvorgangs auf einer Stützwalze ab. Je nach Bauart werden ein bis zwei Stützwalzen und fallweise zusätzliche Stützrollen verwendet. Die Teilbahn- beziehungsweise Fertigrollen werden in ihren Wickelstationen auf Wickelhülsen gewickelt, die jeweils von einem eingeführten Paar Spann- beziehungsweise Führungsköpfen gehalten werden. Die Rollen werden entweder über diese Spann- beziehungsweise Führungsköpfe mit Zentrumswicklung oder über die mindestens eine Stützwalze mit Umfangswicklung oder kombiniert angetrieben.

Im Sinne der vorliegenden Schrift werden auch mit einem Band umschlungene und/oder um die sich bildenden Wickelrollen aus einer Trag- in eine Stützposition bewegbare Wickelwalzen als Trag- oder Stützwalzen verstanden. Beide Maschinentypen verwenden im Allgemeinen zusätzliche Andruckwalzen, die insbesondere im Anfangsstadium jeder Wicklung für ein gewünschtes Maß an Wickelhärte sorgen.

Die Typenfestlegung der zu verwendenden Rollenwickelvorrichtungen ist in der Regel von der herzustellenden Papiersorte und der gewünschten Wickelqualität abhängig. Unabhängig davon steht der Betreiber einer Papierfabrik einer anderen, grundsätzlichen Problematik gegenüber:
Zur Sicherung der Wettbewerbsfähigkeit und zur Erreichung einer hohen Produktivität ist man bestrebt, hohe Produktionsgeschwindigkeiten zu erreichen. Dabei haben sich alle in der Produktionskette einer Papierfabrik befindlichen Vorrichtungen beziehungsweise Maschinen an der durch die Papiermaschine vorgegebenen Produktionsgeschwindigkeit beziehungsweise deren Produktionsausstoß zu orientieren. Da eine Papiermaschine, von Störungsfällen einmal abgesehen, kontinuierlich arbeitet, ist es für eine diskontinuierlich arbeitende Rollenwickelvorrichtung schwierig, der vorgelegten Geschwindigkeit zu folgen, da Rüst-, Beschleunigungs- und Verzögerungszeiten entsprechend der Aufgabe der Formatreduzierung relativ häufig anfallen und deshalb nur durch deutlich höhere Produktionsgeschwindigkeiten auszugleichen sind.

Solche hohen Anforderungen an die Wickelgeschwindigkeiten bergen jedoch ein hohes Gefährdungspotential auf Grund auftretender Schwingungen.

Der zu erzeugende Wickel nimmt kaum eine ideale runde Form an. Kleine Wickelfehler, beispielsweise auf Grund leichter Profilschwankungen der zu wickelnden Papierbahn, addieren sich bei jeder vollen Umwicklung. Im weiteren Verlauf bilden die Wickelrollen in diesen Bereichen Verhärtungen aus. Auf Grund der periodischen Wiederkehr der jeweiligen Wickelfehler des rotierenden Wickels, bilden sich in Abhängigkeit von dessen Umfang und Umfangsgeschwindigkeit Schwingungen entsprechender Frequenz aus.

Mit zunehmender Produktionsgeschwindigkeit wird die Erregerfrequenz immer größer (bei steigender Umfangsgeschwindigkeit durchläuft dieselbe Position des Wickels immer häufiger denselben Wickelspalt) und die Erregeramplitude wird immer heftiger (gleichzeitig wächst mit zunehmendem Wickelrollendurchmesser auch dessen Unebenheit und das wirksames Gewicht). Dabei nimmt die Wahrscheinlichkeit stark zu, dass sich während dieses komplexen Prozesses Schwingungen ausbilden, die (über ganzzahlige Harmonische) geeignet sind, mit den Tragwalzen der Rollenwickelvorrichtung Resonanzen auszubilden, die zu einem heftigen, teilweise raschen "Aufschaukeln" der gesamten Maschine führen können. Wie bekannt, können dabei im Extremfall Wickel aus dem Wickelbett ausgeworfen werden.

Bei heute angestrebten Produktionsgeschwindigkeiten von 3000 m/min besteht kaum noch die wirtschaftlich nutzbare Möglichkeit die Eigenfrequenzen der beteiligten Tragwalzen derart auszulegen, dass eine mögliche Eigenstimmulierung des Systems zuverlässig ausgeschlossen werden kann.

Überlagernd dazu treten noch weitere Schwingungsproblematiken auf. Beispielsweise nimmt die sich bildende Wickelrolle den Zustand eines anisotropen Rotors an. Ursächlich dafür sind Querprofilschwankungen der Papierbahn, die sich bei jeder Umwicklung addieren. Es kann dann bei jeder Umdrehung auch zu Kontaktverlusten oder mindestens unterschiedlichen Linienlasten kommen. Über papiertechnologische Zusammenhänge, wie Kompressibilität oder Reibwert der Bahn, bilden sich dann inhomogene Rollen aus.

Bereits bei einer halbkritischen Geschwindigkeit, die etwa der halben Resonanzdrehzahl der Rolle entspricht, kommt es zu starken Verformungen der Rolle. Diese Verformungen werden auch als s2-Schlag oder 2f-Schlag bezeichnet. Sie stehen abermals in massiver Wechselwirkung mit den anderen am gesamten Wickelsystem beteiligten Komponenten und können mitverantwortlich für einen exzentrischen Rollenaufbau sein.

Zur Bekämpfung der daraus resultierenden Schwingungen und der dann folgenden Schäden ist es bekannt eine auf den oder die zu wickelnden Wickel einwirkende Walze zu dämpfen um einem, sich bildenden Schwingungsprozess Energie zu entziehen. Dabei ist man bestrebt, den Wickelaufbau zu verbessern, verfolgt jedoch in erster Linie das Ziel, gefährliche Wickelrollenauswürfe zu vermeiden. Deshalb wurde bisher stets angenommen, man müsse resonanzkritische Zustände vermeiden, indem man effektiv gegen bereits gefährliche Schwingungsbereiche vorgehe, sodass Dämpfungssysteme nach dem Stand der Technik entsprechend dahin gehend ausgelegt sind, dass sie vor Erreichung kritischer Schwingungszustände besonders effektiv arbeiten. In der Praxis bedeutet dies jedoch, dass die Rollenwickelvorrichtungen, insbesondere Rollenschneidvorrichtungen, im Betrieb recht häufig in Grenzbereichen betrieben werden. Einmal angeregte beziehungsweise selbsterregte Wickelrollen lassen sich nur noch auf ein eben nötiges Maß beruhigen, um den Wickelprozess meist sicher beenden zu können. Der Wickelaufbau ist dabei jedoch im Ergebnis häufig nicht zufrieden stellend. Insbesondere bei wickelkritischen Papiersorten, also bei Papiersorten deren Reibbeiwert über 0,55 und im Besonderen über 0,7 liegt, ist unter hohen Produktionsgeschwindigkeiten der Wickelaufbau im Ergebnis häufig immer noch nicht zufrieden stellend. Daraus abgeleitet ist die Produktivität, das heißt in erster Linie die Wickelgeschwindigkeit, kaum über ein sicher umsetzbares Maß von 2800 m/min steigerbar.

Der Erfindung liegt daher die Aufgabe zugrunde, eine Vorrichtung zum Aufwickeln einer Materialbahn auf eine Wickelrolle derart weiterzuentwickeln, dass der Wickelaufbau verbessert und insbesondere die Verhältnisse im Aufwickelbereich stabilisiert werden.

Die Aufgabe der Erfindung wird dadurch gelöst, dass das Verhältnis aus Dichtungssteifigkeit durch Lagersteifigkeit kleinergleich 0,55, bevorzugt kleinergleich 0,3, ganz bevorzugt nahe Null ist.

Auf diese Weise sind auftretende Slip-Stick Effekte, wie sie üblicherweise bei Dämpfungseinrichtungen auftreten, wirkungsvoll vermeidbar. Diese Slip-Stick-Effekte kommen daher zu Stande, dass Anfangserregungen auf Grund der Dichtungssteifigkeit nicht über das Dämpfungsmittel in Formänderungsarbeit umgesetzt werden können, sondern starr an die Abstützung durchgestellt werden. Die Erfinder haben erkannt, dass die Dichtungssteifigkeit einen Anfangsfehlerbereich im Dämpfungsprozess hervorruft. Slip-Stick-Effekte stören nicht nur den Dämpfungsprozess unterhalb einer gewissen Schwellgrenze sondern treten beim Übergang aus Haft- in Gleitreibung auch als eigenständige Störgröße auf, die Schwingungen verursachen und zur Unrundheitsbildung der Wickelrollen beitragen kann.

Mit Unterstützung einer erfindungsgemäßen Vorrichtung sind Schwingungen im Wickelprozess auch bei Auftreten kleinster Erregungen definiert dämpfbar.

In Versuchen haben sich bereits recht gute Ergebnisse mit einem Verhältnis von Dichtungssteifigkeit zu Lagersteifigkeit von 0,3 gezeigt. Mit einem derartigen Verhältnis nahe Null ließen sich auch besonders wickelkritische Papiere mit einem Reibbeiwert zwischen 0,6 und 0,7 unter hohen Wickelgeschwindigkeiten zu breiten Rollenformaten sicher wickeln. Es ist von Vorteil, wenn die Dichtung zwischen Walzenlager beziehungsweise dessen Übertragungselement und dem Dämpfungsmittel als reibungsfreie Dichtung ausgeführt ist.

Unter einer reibungsfreien Dichtung wird eine Dichtung verstanden, die im technischen Sinne reibungsfrei, oder zumindest weitgehend reibungsfrei ist. Das heißt, dass hier zu vernachlässigende kleine Reibbeiwerte durchaus von dem Begriff "reibungsfrei" mit erfasst werden sollen.

Auf diese Weise sind besonders geringe Dichtungssteifigkeiten von nahe zu Null erreichbar, sodass das Dämpfungsmittel selbst auf kleinste Erregungen reagiert. Damit wird es erstmals möglich, selbst kleinste schwingungsinduzierte Anfangsfehler im sich bildenden Wickelaufbau effektiv zu bekämpfen oder idealer Weise zu verhindern. Eine reibungsbehaftete Dichtung wirkt nämlich, bis zur Überwindung ihres Haftreibbeiwertes, wie eine Verriegelung des Dämpfungsmittels. Das heißt, dass die zu wickelnden Wickelrollen, solange auf einer "starren" Wickeleinrichtung, also einer starr gelagerten Walze, gewickelt werden, bis die Haftreibung der Dichtung plötzlich überwunden wird, was eine kurzzeitig wirkende, zusätzliche Beunruhigung im Wickelrollenaufbau verursacht. Dabei kann der Haftreibbeiwert handelsüblicher Dichtungen durchaus 0,6 bis 0,85 betragen, sodass hier zunächst erhebliche Energien starr an die Abstützung durchgestellt werden, beziehungsweise sich in nachteiligem Wickelaufbau, insbesondere in Unrundheitsbildungen und bereichsweisen Verhärtungen niederschlagen, bis das Dämpfungsmittel überhaupt anfängt wirksam zu werden.

Ein Dämpfungsmittel entzieht einem System über Formänderungsarbeit Energie. Auf diese Weise verringern sich die Amplituden der Schwingungen und damit auch das Risiko gefährlicher Resonanzen. Zur technischen Umsetzung wird die Energie meist mittels Reibung in thermische Energie umgesetzt, weshalb es besonders überraschend ist, erfindungsgemäß einen solchen Effekt an einer ganz bestimmten Stelle auszuschließen, um eine möglichst gute Dämpfungswirkung zu erzielen.

Ein Dämpfungsmittel, das einen Zylinder und einen darin bewegbaren Kolben aufweist, umfasst mindestens eine Druckkammer, in der sich ein Dämpfungsmedium befindet, dass unter Kolbenbelastung einem Druck aussetzbar ist und dessen Reibarbeit, und damit dessen Dämpfungsgrad, im Allgemeinen über eine Ventilstellung einstell- oder regelbar ist.

Es ist jedoch auch ebenso denkbar, dass das Walzenlager selbst einen notwendigen Bestandteil eines Dämpfungsmittels bildet, also mit einem Dämpfungsmedium in direktem Kontakt steht.

Eine mittels einer erfindungsgemäßen Vorrichtung von Anfang an beruhigbare Wickelrolle bildet sich wesentlich homogener aus und verursacht weit weniger selbsterregte Schwingungen im weiteren Wickelprozess. Der gesamte Prozess läuft wesentlich ruhiger und stabiler ab und erzeugt Wickelrollen höherer Qualität. Auch sind so höherer Produktionsgeschwindigkeiten und schärfere Beschleunigungsbeziehungsweise Verzögerungsvorgänge möglich.

Es ist von Vorteil, wenn die reibungsfreie Dichtung als berührungsfreie Dichtung, insbesondere als Spaltdichtung, Labyrinthdichtung oder Sperrluftdichtung ausgeführt ist.

Eine Dichtung wird als berührungsfrei bezeichnet, wenn die beiden Dichtspalt bildenden Teile mit und ohne Bewegung und ohne Hilfsenergie dauerhaft voneinander durch einen endlichen Spalt getrennt sind. Derartige Dichtungen bieten unter anderem den Vorteil verschleißfrei zu sein und keine Änderungen in ihren Dichtwirkungen aufzuweisen. Auch sind Wärmeübertragung der Dichtspalt bildenden Teile gering und keine Beschränkung zulässiger Relativgeschwindigkeiten zu beachten.

Somit sind Slip-Stick-Effekte über den gesamten Wickelprozess auch bei dauerhafter dynamischer Belastung der Rollenwickelvorrichtung wirkungsvoll vermeidbar.

Spaltdichtungen bieten den Vorteil relativ einfacher Herstellung, obwohl hier selbstverständlich auf die Einhaltung vorgegebener Toleranzen und eine akkurate Bearbeitung der Oberflächen zu achten ist. Auch sind hier Abrisse eines, aus dem verwendeten Dichtmedium, insbesondere aus dem verwendeten Dämpfungsmedium, ganz insbesondere aus dem verwendeten Dämpfungsöl, gebildeten, Dichtfilms bei korrekt gewähltem Verhältnis aus Spalthöhe und Spaltlänge kaum zu erwarten. Labyrinthdichtungen bieten eine erhöhte Dichtwirkung, da die wirksame Spaltlänge künstlich erhöht ist und das Dichtmedium mehrere Umlenkungen erfährt.

Bei beiden Dichtungsarten ist es sinnvoll für eine Rückführung des Dichtungsmediums, also insbesondere des Dämpfungsmediums, aus dem Dichtspalt in die Druckkammer des Dämpfungsmittels zu sorgen. Sperrluftdichtungen bieten die sicherste Abschirmung gegen Austreten und Eindringen an der Dichtstelle, wobei die Sperrluft jedoch über eine Versorgungseinheit in den Dichtspalt einbringbar sein muss.

Dabei ist es von besonderem Vorteil, wenn die berührungslose Dichtung eine Spalthöhe aufweist, die zwischen 0,008 mm und 0,1 mm, bevorzugt zwischen 0,025 und 0,065, ganz bevorzugt zwischen 0,03 und 0,045 beträgt.

Derartige Spalthöhen bieten einen guten Kompromiss zwischen hoher Dichtwirkung und vertretbaren Herstellungskosten.

Dabei lassen besonders geringe Spalthöhen höhere Drücke zu.

Ferner ist es in diesem Zusammenhang bevorzugt, dass die Spaltlänge zwischen 5 mm und 350 mm, bevorzugt zwischen 12 und 100, ganz bevorzugt zwischen 18 und 60 beträgt. Bei Labyrinthdichtungen wird dazu die Länge aller Mittellinien addiert.

Derartige Kombinationen bieten hohe bis sehr hohe Dichtwirkungen und stellen nicht allzu hohe Anforderungen an das Dichtungsmedium, hier also das Dämpfungsmedium.

Mit Vorteil ist dafür gesorgt, dass die Lagersteifigkeit des mindestens einen Walzenlagers mittels einer Änderungseinrichtung änderbar ist, insbesondere während des Wickelprozesses änderbar ist.

Damit ist es möglich, mindestens auf einen Teil der sich im Wickelprozess, wie im einleitenden Teil beschrieben, fortlaufend ändernden Parameter zu reagieren. Auch ist es möglich Resonanzverstimmungen zu erzeugen. Ein wesentlicher Vorteil einer derartigen Ausgestaltung liegt auch darin, dass zu Beginn des Wickelprozesses eine weiche Lagerung auch kleinste Anfangserregungen mit relativ großen Amplituden an das Dämpfungsmittel durchstellt, während im Verlauf des Wickelprozesses dann durch eine Versteifung der Lagersteifigkeit auf das wachsende Gewicht der mindestens einen Wickelrolle reagiert werden kann.

Es ist von Vorteil, wenn die Lagersteifigkeit des mindestens einen Walzenlagers durch eine reibungsfrei bewegbare Federanordnung beeinflusst ist.

Auf diese Weise ist sicherstellbar, dass die Dämpfungseinrichtung ohne Anfangsstörung einsetzbar ist. Damit ist der von dem Dämpfungsmittel zur Verfügung gestellte breite Dämpfungsbereich, insbesondere die Dämpfbarkeit auch kleinster Erregungen auf die gesamte Dämpfungseinrichtung übertragbar. Auch sind so Fehlerquellen in der konstruktiven Auslegung der Dämpfungseinrichtung vermeidbar.

Mit besonderem Vorteil ist dafür gesorgt, dass das Dämpfungsmittel einen Leistungsbereich aufweist, der durch ein Dämpfungsvermögen bereits geringster Bewegungen des Walzenlagers von unter 5 mm pro Sekunde, bevorzugt von unter 1 mm pro Sekunde, ganz bevorzugt von unter 0,5 mm pro Sekunde definierbar ist. Somit sind entstehende Schwingungen bereits in frühestem Stadium ihrer Entwicklung wirkungsvoll dämpfbar.

Mit Vorteil handelt es sich bei der mindestens einen Walze um eine Stützwalze, eine Tragwalze oder eine Auflagewalze.

Im Sinne der vorliegenden Schrift werden auch mit einem Band umschlungene und/oder um die sich bildenden Wickelrollen aus einer Trag- in eine Stützposition bewegbare Wickelwalzen als Trag- oder Stützwalzen verstanden.

Mit Tragwalzen ausgestattete Rollenwickelvorrichtungen sind generell am stärksten Schwingungsgefährdet und bieten das Hauptzielfeld der vorliegenden Erfindung.

Stützwalzen-Rollenwickelvorrichtungen sind zwar im Allgemeinen nicht so stark schwingungsgefährdet, werden aber zur Bearbeitung besonders empfindlicher und kritischer Papiersorten verwendet und können aus diesem Grund auch ein wichtiges Einsatzfeld für die vorliegende Erfindung bieten.

Auflagewalzen werden neben ihrer Grundfunktion, der Erhöhung der Wickelhärte zu beginn des Wickelprozesses, heute häufig zur Stabilisierung der sich bereits im fortschreitenden Bildungsstadium befindlichen Wickelrollen verwendet und sind dann zunehmend mit einem Dämpfungseinrichtung ausgerüstet. Unter Berücksichtigung des eingangs genannten Effekts, dass ein Dämpfungsmittel, das eine reibungsbehaftete Dichtung aufweist, bis zur Überwindung der Haftreibung wie eine starre Lagerung wirkt, wirkt die Auflagewalze in dieser Phase als zusätzlich auf die Wickelrollen einwirkenden Störgröße. Dies ist erfindungsgemäß erstmals vermeidbar.

Es kann von Vorteil sein, wenn das Dämpfungsmittel einen Teil einer passiven Dämpfungseinrichtung bildet.

Eine passive Dämpfungseinrichtung bietet generell die Möglichkeit, anliegende Schwingungsenergie abzubauen, dass heißt den Amplitudenausschlag des vorliegenden Schwingungszustandes zu verringern. Insbesondere unter Verwendung des vorliegenden Erfindungsgedanken kann eine solche Dämpfungseinrichtung sehr wirkungsvoll sein, da mittels einer erfindungsgemäßen Vorrichtung bereits geringste Schwingungsenergien mindestens teilweise aufzehrbar sind. Dann bietet eine passive Dämpfungseinrichtung eine hohe Wirkung bei einem sehr übersichtlichen Kostenaufwand.

Dabei ist es auch denkbar, dass das Dämpfungsmittel den einzigen Teil einer passiven Dämpfungseinrichtung bildet.

Ebenso kann es von Vorteil sein, wenn das Dämpfungsmittel einen Teil einer aktiven Dämpfungseinrichtung bildet.

Während eine passive Dämpfungseinrichtung naturgemäß einem "feed-back"-Prinzip unterliegt, dass heißt stets nur reagierend wirksam sein kann, ist mit einer aktiven Dämpfung auch ein "feed-forward"-Prinzip umsetzbar, in dem man aus Messsignalen oder Erfahrungswerten vorausschauend auf Schwingungsbildungen einwirkt, beziehungsweise diesen entgegenwirkt.

Dazu kann beispielsweise der über das Dämpfungsmedium ausübbare (gegen-)Druck auf den Kolben veränderbar sein und beispielsweise eine bevorstehenden Belastung entgegen wirken. Da auch der Kolben eine Masse besitzt, ist er über rasche Druckänderungen in Schwingungen zu versetzen, die in Überlagerung mit den zu bekämpfenden Schwingungen bringbar sind, wodurch diese reduzierbar sind. Dann spricht man technisch korrekt von einer Tilgung, die im Sinne der vorliegenden Schrift von dem Begriff "Dämpfung" mit erfasst sein soll.

Mit besonderem Vorteil ist dafür gesorgt, dass ein Teil der Dämpfungseinrichtung durch ein Gummielement gebildet ist.

Gummielemente weisen prinzipiell ein gutes Dämpfungsverhalten gegenüber maschinenerzeugten Schwingungen auf. Häufig ist ihre Einsetzbarkeit jedoch wegen räumlichen Begrenzungen konstruktiv wenig sinnvoll umsetzbar. Ihr Arbeitsbereich steht wenigstens mittelbar im Zusammenhang mit dem so genannten Verlustfaktor D_{L}, der werkstoff-und belastungsabhängig ist und für verschiedene Kautschukarten auf einen Resonanzbereich bezogen sinnvolle Werte zwischen 0,20 und 0,35 annehmen kann. So ist von diesem Verlustfaktor D_{L} auch die nötige Dämpfungsfläche mindestens mittelbar abhängig ist. Das durch Formänderungsarbeit dämpfende Gummielement emmitiert die entzogene Energie schließlich in Wärme. Ein erwärmtes Gummielement weist dann jedoch andere Dämpfungseigenschaften auf. Unter Dauerbelastung ermüdet schließlich ein solches Gummielement relativ rasch.

Wird das Gummielement jedoch lediglich mit einem, auf ihn, mittels einer anderen Funktionsgruppe der Dämpfungseinrichtung, zugeschnittenen Schwingungsbereich belastet kann es lange Zeit hervorragende Dämpfungsarbeiten leisten. Dabei leistet das Gummielement auch entlastende Arbeiten hinsichtlich bewegter Maschinenelemente, hier insbesondere der Kolbeneinheit des Dämpfungsmittels.

Es kann bevorzugt sein, dass die Walzenlager mit einem endlichen Radius, insbesondere zwischen 350 mm und 2050 mm, ganz insbesondere zwischen 600 mm und 900 mm, um einen Drehpunkt bewegbar angeordnet sind.

Auf diese Weise besteht eine weitere Möglichkeit das Schwingungssystem aus der mindestens einen Walze und der Wickelrollen zu verstimmen. Somit ist insbesondere der obere Wirkungsbereich des Dämpfungsmittels quantitativ begrenzbar und Synergieeffekte erzielbar.

Ebenso kann es bevorzugt sein, die Walzenlager linear bewegbar angeordnet sind.

Auf diese Weise wird der Dichtungsbereich geschont und eine sichere und verschleißfreie Funktion besonders gut gewährleistet. In der Gegenrichtung kann somit auch eine synchrone wirkungsweise des Dämpfungsmittels auf die Aufhängungen des bewegbaren Walzenlagers sichergestellt werden.

Mit Vorteil ist dafür gesorgt, dass eine Ausrichtvorrichtung vorgesehen ist, mittels der eine Bewegungsrichtung des mindestens einen Walzenlagers ausrichtbar ist.

Auf diese Weise ist eine exakte Justierung sowohl bei der Inbetriebnahme der Rollenwickelvorrichtung, wie auch nach längerem Gebrauch gewährleistet. Auch kann es fallweise von Bedarf sein, dass die Wirkungsrichtung des Dämpfungsmittels - die sinnvoller Weise in Niprichtung weisen sollte nachjustierbar oder gar änderbar ist.

Bevorzugt ist der Dämpfungsgrad der Dämpfungseinrichtung und/oder des Druckmittels kontinuierlich oder diskret änderbar.

Der Grad, also die Intensität der einwirkenden Dämpfungsmaßnahmen ist dagegen ohne Störeinfluss, auf den Wickelprozess, änderbar. Eine Änderung des Dämpfungsgrades kann den Wirkbereich der angewendeten Dämpfungseinrichtung /-mittel wesentlich verbreitern und die Auswirkungen sich darin auf einzelne schwingende Elemente, hier insbesondere Wickelrollen und Walzen, befindlicher kritischer Schwingungsbereiche durch rasches Umgehen oder Durchfahren, verringern.

Es ist von Vorteil, wenn das Verhältnis einer Walzensteifigkeit () zu der Lagersteifigkeit () größergleich als 0,66, insbesondere größergleich 1, ganz insbesondere größergleich 1,41 ist, wobei das Verhältnis oberhalb dieser Werte vorzugsweise einstellbar ist.

Auf diese Weise werden die im Wickelprozess auftretenden Schwingungen relativ direkt an das Dämpfungsmittel durchgestellt. Die sich stark im Wickelprozess ändernden Aufnahmevermögen der anderen Bauteile, wie beispielsweise der Walzen selbst, rücken in den Hintergrund. Eine sehr exakte Abstimmung der durch das Dämpfungsmittel zu leistenden Dämpfungsanforderungen ist somit erreichbar.

Es ist von Vorteil, wenn mindestens eine der mindestens einen Walze mit einem drehsteifen Antrieb ausgerüstet ist.

Dabei ist es besonders vorteilhaft, wenn es sich bei dem drehsteifen Antrieb um einen, insbesondere integrierten, Gleichstrom- oder Synchronmotor handelt und dieser vorzugsweise als Direktantrieb ausgelegt ist.

Auf diese Weise sind maschinenbedingte Reaktions- beziehungsweise Durchstellungenauigkeiten vermeidbar und das Dämpfungsverhalten des Dämpfungsmittels exakt dosierbar. Vorzugsweise steht das Dämpfungsmittel mit einer hochauflösenden Steuerungs-/Regelungseinrichtung in Verbindung.

Es kann bevorzugt sein, dass die Umgebung der mindestens einen Walze innerhalb eines Radius von 8 Metern, bevorzugt von 5 Metern, ganz bevorzugt von 3 Metern mittels einer Klimatisierungseinrichtung gleichmäßig klimatisierbar, insbesondere temperierbar ist.

Dabei ist durch einen weiteren Radius, beispielsweise von 7 oder 8 Metern eine besonders gleichmäßige Klimaanpassung möglich, während durch einen möglichst engen Radius geringe Betriebskosten erzielbar sind. Besonders bevorzugt steht eine Klimatisierungseinrichtung mit mindestens 2 Sensoren zur Klimaerfassung insbesondere zur Erfassung von Temperatur und/oder Luftfeuchte in Verbindung. Die Klimatisierungseinrichtung kann beispielsweise von einer sowieso vorhandenen Klebstoffauftragseinrichtung gebildet sein. Dabei ist bevorzugt, dass die Klebemittelauftragseinrichtung für Heißkleber eingerichtet ist und als traversierende Klebemittelauftragseinrichtung ausgebildet ist. Dann ist der für die Verklebung benötigte Wärmeeintrag gering (nur eine Düse) und gut (traversierend) verteilt. Im Bedarfsfall kann die Klebemittelauftragseinrichtung jedoch auch als Heizung fungieren und möglicherweise zu hoher Luftfeuchtigkeit entgegenwirken. Fallweise kann die Heizleistung beispielsweise über ein, bevorzugt ausrichtbares und in dem zu erzeugenden Luftstrom steuer- oder regelbaren - Luftgebläse verteilt werden. Derartige Klimatisierungseinrichtungen sind generell dann besonders hilfreich, wenn beispielsweise durch ein Kellerlayout der Rollenschneideinrichtung oder andere Kapselungen unterschiedliche Klimazonen entstehen.

Auch kann es von Vorteil sein, wenn die freien Züge der Materialbahn, mittels Leiteinrichtung und/oder Stabilisierungseinrichtung kleinergleich 2300mm, insbesondere kleinergleich 1800 mm, ganz insbesondere kleinergleich 1400 mm ausbildbar sind.

Auf diese Weise sind Materialbahnabrisse vermeidbar und insgesamt höhere Produktivitäten erzielbar.

Ferner ist es von Vorteil, wenn mindestens ein Sensor (), vorzugsweise mehrere Sensoren zur Erfassung mindestens eines, vorzugsweise mindestens zwei, der genannten Parameter vorgesehen ist:
- Frequenz der Kolbenbewegung
- Amplitude der Kolbenbewegung
- Viskosität und/oder Temperatur und/oder Wassergehalt und/oder Luftgehalt und/oder Festpartikelgehalt des Dämpfungsöles
- Druck und/oder Verlustmenge des Dämpfungsöles

Bevorzugt sind die erfassten Daten einer Steuer- /Regelungseinheit zuführbar, die in bevorzugter Weise mit einer übergeordneten Steuerungs-/Regelungseinheit in Verbindung bringbar ist.

Durch die Erfassung einzelner, insbesondere mehrere, der genannten Parameter ist eine seriöse Datenversorgung der Steuerungs-/Regelungseinheit gewährleistet und moderne Regelungsmechanismen verwendbar. Insbesondere ist die Steuerungs-/Regelungseinheit den im Prozess augenblicklich vorliegenden Anforderungen blitzschnell anpassbar und Fehlberechnungen auf Grund sich ändernden Prozessparametern vermeidbar.

Weitere vorteilhafte Ausgestaltungen der Erfindung ergeben sich aus der Beschreibung, den Ausführungsbeispielen und den dargestellten Figuren. Die Erfindung wird im Folgenden anhand von Ausführungsbeispielen unter Bezugnahme auf die Zeichnungen näher erläutert. In diesen zeigen:
- Figur 1: Rollenwickelvorrichtung
- Figuren 2: Walzenanordnung
- Figur 3: Alternative Ausgestaltung

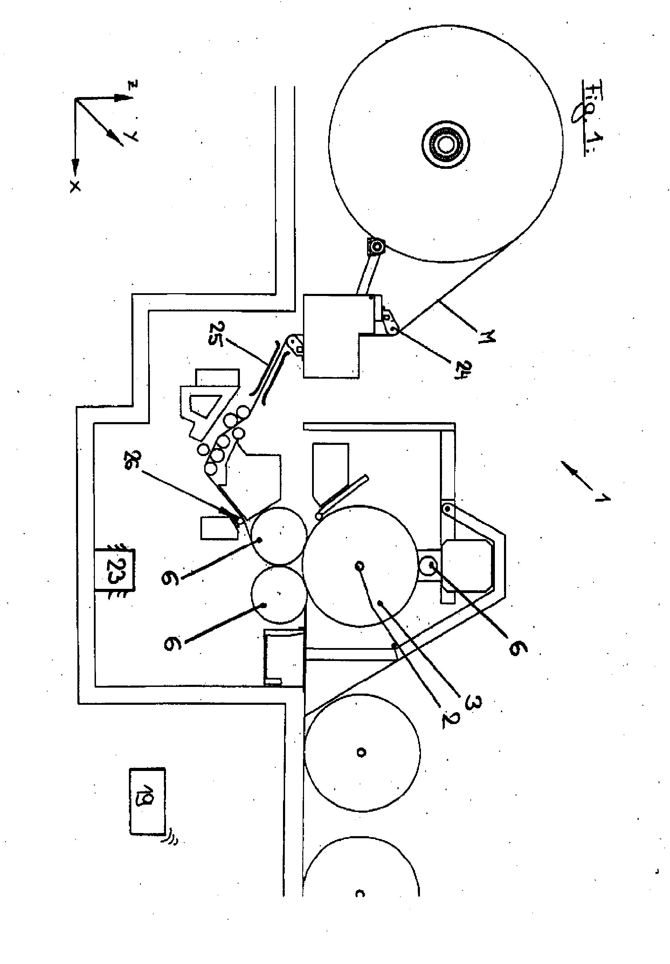

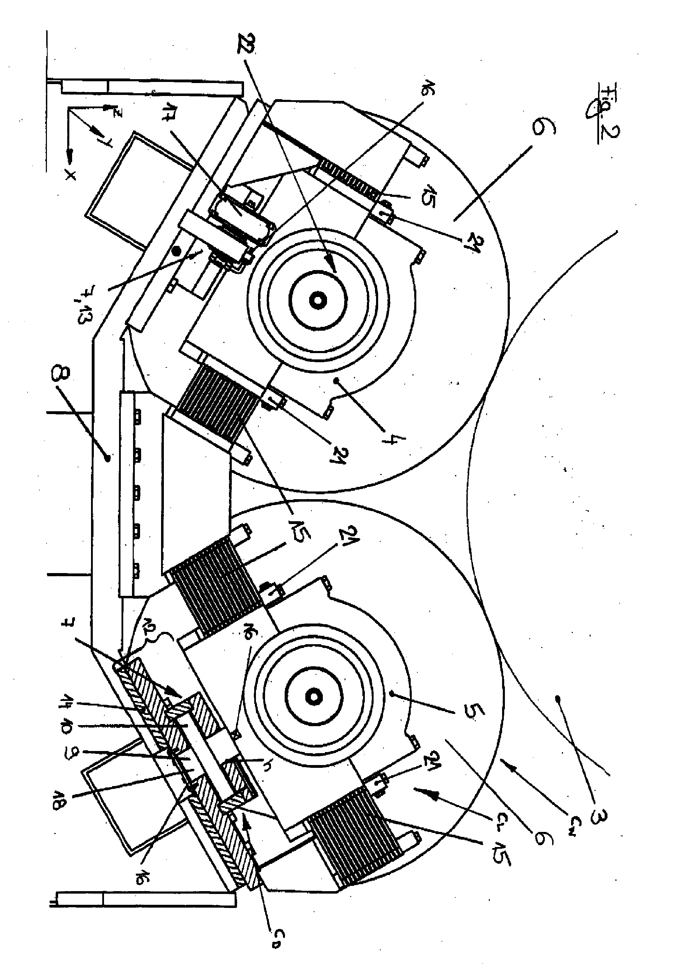

Die in den Figuren 1 und 2 dargestellte bevorzugte Ausführungsform einer erfindungsgemäßen Rollenwickelvorrichtung 1 ist im Zusammenhang mit einer Tragwalzenwickelvorrichtung realisiert, die im Bereich ihrer Aufwicklung eine Walzenanordnung aufweist. Die Walzenanordnung weist zwei als Tragwalzen ausgebildete Walzen 6 auf, die eine Walzensteifigkeit C_{w} aufweisen, die im dargestellten Beispiel zwischen dem ein- und dreifachen der änderbaren Lagersteifigkeit CL betragen soll.

Mindestens eine der Walzen 6 ist mit Hilfe eines Antriebes 22 antreibbar. Im bevorzugten Ausführungsbeispiel ist der sehr drehsteife Antrieb durch einen in die Walze integrierten Direktantrieb ausgebildet. Vorzugsweise sind beide Walzen 6 antreibbar und stehen über eine gemeinsame Steuerungs-/Regelungseinheit 19 in Verbindung. Dabei hat es sich bewährt, wenn die, in Laufrichtung, der Materialbahn M, insbesondere der Papierbahn, also in x-Richtung, erste Walze 6 drehzahlgeregelt und die zweite Walze 6 drehmomentengeregelt ist. Die Achsen der Walzen 6 sind in Walzenlagern 4,5 gelagert, die sich auch auf unterschiedlichen Höhenniveaus in z-Richtung befinden können. Weiterhin können die Walzen 6 unterschiedlich starke Durchmesser aufweisen. Selbstverständlich kann mindestens eine der beiden Walzen 6 auch eine, an der Materialbahn M wirksam werdende Beschichtung oder Ummantelung aufweisen, während beispielsweise die andere Walze 6 als Stahlwalze ausgebildet ist.

Neben den Tragwalzen 6 bilden die mindestens eine auf einem Wickelkern, hier einer Wickelhülse 2 zu wickelnde Wickelrolle 3 und eine nicht immer nötige Auflagewalze 6 wesentliche Elemente einer Wickelanordnung einer Rollenwickelvorrichtung. Aus Gründen der Übersicht ist in der Figur 2 näher dargestellten Walzenanordnung auf die Darstellung der Auflagewalze 6 verzichtet worden, obwohl mit ihr gleichsam auf die sich bildende Wickelrolle 3 eingewirkt werden kann.

Die beiden bewegbaren Walzenlager 4,5 der Walzen 6 weisen eine Lagersteifigkeit C_{L} auf, die in den dargestellten Ausgestaltungen von Federanordnungen 15 beeinflusst ist. Die Walzenlager 4,5 sind über Dämpfungsmittel 7 mit der Abstützung 8 verbunden, wobei das Dämpfungsmittel 7 eine Dichtungssteifigkeit C_{D} aufweist, die in Verhältnis mit der genannten Lagersteifigkeit C_{L} steht. Das im Bild links dargestellten Dämpfungsmittel 7 ist Teil einer aktiven Dämpfungseinrichtung 13, die über eine Steuerungs-/Regelungseinheit 19 auch derart ansteuerbar ist, dass sie auftretenden Schwingungen mit gezielten Schwingungsbewegungen entgegen wirken kann.

Zur Änderung des Dämpfungsgrades ist die aktive Dämpfungseinrichtung 13 zusätzlich mit einer Änderungseinheit 17 ausgestattet, die auf die Viskosität des im Zylinder 9 der aktiven Dämpfungseinheit 13 befindliche, als Druckmedium 18 wirksame elektrorheologische Öl, einwirken kann. Das Dämpfungsverhalten ändert sich dann mit der Viskosität. Neben dieser besonders eleganten und raschen Möglichkeit, läßt sich der Dämpfungsgrad jedoch auch über diskret oder kontinuierlich verstellbare Ventilöffnungen im Zylinderbereich oder dessen zu- und Abfuhrleitungen bewerkstelligen.

Das zu der im rechten Bildbereich abgebildeten Walzenlagerung gehörige Dämpfungsmittel 7 arbeitet mit üblichem Hydrauliköl als Dämpfungsmedium 18 und ist Teil einer passiven Dämpfungseinrichtung 12, die auch ein Gummielement 14 umfasst.

Durch die geschnittene Darstellung des rechten Dämpfungsmittels 7 ist gut für beide Dämpfungsmittel 7 ausgeführte, generelle Aufbau aus Zylinder 9 und dem darin gegen ein druckbeaufschlagbares Dämpfungsmedium 18 bewegbaren Kolben 10 zu erkennen. Die zwischen dem Kolben 10, der auch eine Kolbenstange umfasst, und dem Zylinder 9 nötigen Dichtflächen sind als reibungsfreie Dichtungen 11, in Form von berührungsfreien Spaltdichtungen ausgebildet. Ihre Spalthöhen h betragen zwischen 0,025mm und 0,035mm. Damit sind die Dämpfungsmittel 7 sogar geeignet bereits kleinste Erregungen, durch Schwingbewegungen von unter 0,15 Meter pro Sekunde wirksam in Formänderungsarbeit umzusetzen.

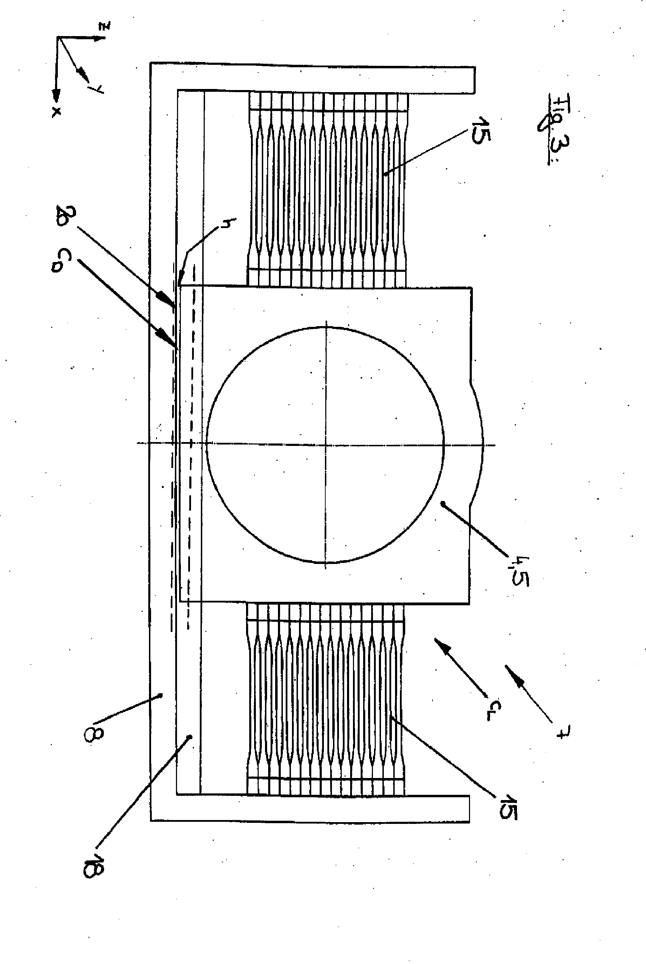

In Figur 3 ist eine alternative Ausgestaltung von Walzenlageranordnung 4,5 und Dämpfungsmittel 7 dargestellt, wobei das Walzenlager 4,5 hier direkt einen notwendigen Bestandteil eines Dämpfungsmittels 7 darstellt und mit der Abstützung 8 eine Druckkammer 20 ausbildet, in der sich das Druckmedium bewegt. Bei einer Rollenwickelvorrichtung ist davon auszugehen, dass die Schwingungsamplituden des Walzenlagers kleinergleich einem Millimeter sind. Fallweise können sie jedoch darüber liegen. Im Allgemeinen wird es jedoch genügen, wenn die dargestellte Spalthöhe h etwa 1,2 mm bis 2,8 mm beträgt. Das Druckmedium kann in einem solch engen Spalt nur unter erheblichen Formänderungsarbeiten entweichen und bietet sehr gute Dämpfungseigenschaften. Da die Dichtungssteifigkeit einer solchen Anordnung auch nahezu Null beträgt, sind auch hier kleinste Erregungen wirkungsvoll dämpfbar.

Zur bewegbaren Anordnung sind die Walzenlager über Federanordnungen 15 mit der Abstützung verbunden, die hier auch das Widerlager für die Dämpfungsmittel 7 beziehungsweise Dämpfungseinrichtungen 12, 13 bildet. Die Federanordnungen 15 sind symmetrisch um die Walzenlager 4,5 angeordnet und lassen eine, im technischen Sinne reibungsfreie, lineare Bewegung der Walzenlager 4,5 zu. Dazu bestehen die Federanordnungen aus einzelnen Blattfedern, die sich berührungsfrei verformen können. Die Stärke der einzelnen Blattfedern kann gleich oder unterschiedlich sein, ihre Kennlinien degressiven oder progressiven Charakter annehmen. Die einzelnen Blattfedern sind austauschbar und die Gesamtfederstärke damit in diskreten Schritten wählbar.

Über Änderungseinrichtungen 21 sind die Federanordnungen 15 in ihren Vorspannungen änderbar und damit die wirksame Federkraft kontinuierlich anpassbar. Somit ist die wirksame Lagersteifigkeit beeinflussbar und vorzugsweise auch während des Wickelprozesses einstellbar. Auch über die Federanordnung 15 läßt sich schließlich der Dämpfungsgrad beeinflussen.

Damit die Steuerungs-/Regelungseinheit 19 korrekt arbeiten kann sind drei Sensoren 16 vorgesehen, die im vorliegenden Fall die Frequenz und die Amplitude der Walzenlager 4,5, sowie verschiedene Parameter der Druckmedien erfassen.

Zur Vermeidung von Abrissen der Materialbahn M und damit einhergehenden Produktionseinbußen sind Leiteinrichtungen 24 in Form von Leitwalzen und Stabilisierungseinrichtungen 25 in Form von, vorzugsweise Druckluftunterstützten, Leitblechen vorgesehen.

Zur Erzielung guter Wickelverhältnisse ist zudem eine Klimatisierungseinrichtung 23 unterhalb der Walzen 6 angeordnet, die das Klima im Wickelbereich beispielsweise an das sonstige Umgebungsklima, also Hallenklima, anpasst und dazu beispielsweise die Luft hinsichtlich ihrer Temperatur und ihres Feuchtigkeitsgehaltes konditioniert.

Ein gewisse Klimabeeinflussung ist auch durch die als traversierende Heißleimauftragseinrichtung ausgebildete Klebemittelauftragseinrichtung 26 möglich.

Von den dargestellten Ausführungsformen kann in vielfacher Hinsicht abgewichen werden, ohne den Grundgedanken der Erfindung zu verlassen.

### Bezugszeichenliste

- 1: Rollenwickelvorrichtung
- 2: Wickelhülse
- 3: Wickelrolle
- 4: Walzenlager
- 5: Walzenlager
- 6: Walze
- 7: Dämpfungsmittel
- 8: Abstützung
- 9: Zylinder
- 10: Kolben
- 11: Dichtung
- 12: Passive Dämpfungseinrichtung
- 13: Aktive Dämpfungseinrichtung
- 14: Gummielement
- 15: Federanordnung
- 16: Sensor
- 17: Änderungseinheit
- 18: Druckmedium
- 19: Steuerungs- /Regelungseinheit
- 20: Druckkammer
- 21: Änderungseinrichtung
- 22: Antrieb
- 23: Klimatisierungseinrichtung
- 24: Leiteinrichtung
- 25: Stabilisierungseinrichtung
- 26: Klebemittelauftragseinrichtung
- C_{D}: Dichtungssteifigkeit
- C_{L}: Lagersteifigkeit
- Cw: Walzensteifigkeit
- h: Spalthöhe
- M: Materialbahn (Papierbahn)
- x: x-Richtung
- Y: y-Richtung
- z: z-Richtung

## Patentansprüche

1. Rollenwickelvorrichtung (1) zum Aufwickeln einer Materialbahn, insbesondere einer Papier- oder Kartonbahn (M), auf mindestens einen Wickelkern, vorzugsweise eine Wickelhülse (2) zu mindestens einer Wickelrolle (3), an der beim Wickeln mindestens eine in einem, eine Lagersteifigkeit (C_{L}) aufweisenden Walzenlager (4,5) gelagerte Walze (6) anliegt, wobei das Walzenlager (4,5) über ein, eine Dichtungssteifigkeit (C_{D}) aufweisendes Dämpfungsmittel (7) bewegbar mit einer Abstützung (8) verbunden ist,
**dadurch gekennzeichnet, dass**
das Verhältnis aus Dichtungssteifigkeit (C_{D}) durch Lagersteifigkeit (C_{L}) kleinergleich 0,55, bevorzugt kleinergleich 0,3, ganz bevorzugt nahe Null ist.

2. Rollenwickelvorrichtung (1) nach dem vorhergehenden Anspruch,
**dadurch gekennzeichnet, dass**
eine Dichtung (11) zwischen Walzenlager (4,5) beziehungsweise dessen Übertragungselement und dem Dämpfungsmittel (7) als reibungsfreie Dichtung ausgeführt ist.

3. Rollenwickelvorrichtung (1) nach dem vorhergehenden Anspruch,
**dadurch gekennzeichnet, dass**
die reibungsfreie Dichtung als berührungsfreie Dichtung, insbesondere als Spaltdichtung, Labyrinthdichtung oder Sperrluftdichtung ausgeführt ist.

4. Rollenwickelvorrichtung (1) nach einem der vorhergehenden Ansprüche,
**dadurch gekennzeichnet, dass**
die Lagersteifigkeit (C_{L}) des mindestens einen Walzenlagers (4,5) mittels einer Änderungseinrichtung (21) änderbar ist, insbesondere während des Wickelprozesses änderbar ist.

5. Rollenwickelvorrichtung (1) nach einem der vorhergehenden Ansprüche,
**dadurch gekennzeichnet, dass**
die Lagersteifigkeit (C_{L}) des mindestens einen Walzenlagers (4,5) durch eine reibungsfrei bewegbare Federanordnung (15) beeinflusst ist.

6. Rollenwickelvorrichtung (1) nach einem der vorhergehenden Ansprüche,
**dadurch gekennzeichnet, dass**
es sich bei der mindestens einen Walze (6) um eine Stützwalze, eine Tragwalze oder eine Auflagewalze handelt.

7. Rollenwickelvorrichtung (1) nach einem der vorhergehenden Ansprüche,
**dadurch gekennzeichnet, dass**
das Dämpfungsmittel (7) einen Teil einer passiven Dämpfungseinrichtung (12) bildet.

8. Rollenwickelvorrichtung (1) nach einem der Ansprüche 1 bis 6,
**dadurch gekennzeichnet, dass**
das Dämpfungsmittel (7) einen Teil einer aktiven Dämpfungseinrichtung (13) bildet.

9. Rollenwickelvorrichtung (1) nach einem der vorhergehenden Ansprüche,
**dadurch gekennzeichnet, dass**
ein Teil der Dämpfungseinrichtung (12,13) durch ein Gummielement (14) gebildet ist.

10. Rollenwickelvorrichtung (1) nach einem der vorhergehenden Ansprüche,
**dadurch gekennzeichnet, dass**
der Dämpfungsgrad der Dämpfungseinrichtung (12,13) und/oder des Dämpfungsmittels (7) kontinuierlich oder diskret änderbar ist.

11. Rollenwickelvorrichtung (1) nach einem der vorhergehenden Ansprüche,
**dadurch gekennzeichnet, dass**
das Verhältnis einer Walzensteifigkeit (C_{w}) zu der Lagersteifigkeit (C_{L}) größergleich als 0,66, insbesondere größergleich 1, ganz insbesondere größergleich 1,41 ist, wobei das Verhältnis oberhalb dieser Werte vorzugsweise einstellbar ist.

12. Rollenwickelvorrichtung (1) nach einem der vorhergehenden Ansprüche,
**dadurch gekennzeichnet, dass**
mindestens eine der mindestens einen Walze (6) mit einem drehsteifen Antrieb (22) ausgerüstet ist.

13. Rollenwickelvorrichtung (1) nach einem der vorhergehenden Ansprüche,
**dadurch gekennzeichnet, dass**
es sich bei dem drehsteifen Antrieb (22) um einen, insbesondere integrierten, Gleichstrom- oder Synchronmotor handelt und dieser vorzugsweise als Direktantrieb ausgelegt ist.

14. Rollenwickelvorrichtung (1) nach einem der vorhergehenden Ansprüche,
**dadurch gekennzeichnet, dass**
die Umgebung der mindestens einen Walze (6) innerhalb eines Radius von 8 Metern, bevorzugt von 5 Metern, ganz bevorzugt von 3 Metern mittels einer Klimatisierungseinrichtung (23) gleichmäßig klimatisierbar, insbesondere temperierbar ist.

15. Rollenwickelvorrichtung (1) nach einem der vorhergehenden Ansprüche,
**dadurch gekennzeichnet, dass**
die freien Züge der Materialbahn (M), mittels Leiteinrichtung (24) und/oder Stabilisierungseinrichtung (25) kleinergleich 2300mm, insbesondere kleinergleich 1800 mm, ganz insbesondere kleinergleich 1400 mm ausbildbar sind.
